# EUROPÄISCHE PATENTANMELDUNG

(11) **EP 1 128 640 A2**
(43) Veröffentlichungstag der Anmeldung: **29.08.2001**
(21) Anmeldenummer: 01101942.9
(22) Anmeldetag: 29.01.2001
(51) Int. Cl.: H04M 1/66, H04B 1/38

(54) **Verfahren zum Betrieb eines Autotelefons sowie Autotelefon**

(30) Priorität: 21.02.2000 DE 10007812
(71) Anmelder: BECKER GmbH, D-76307 Karlsbad (DE)
(72) Erfinder: Wietzke, Joachim, Dr., 76228 Karlsruhe (DE); Wolf, Stefan, Dr., 64367 Mühltal (DE); Lappe, Dirk, 76228 Karlsruhe (DE)
(74) Vertreter: Patentanwälte Westphal, Mussgnug & Partner

(57) **Zusammenfassung**

Um die Einsatzmöglichkeiten eines Autotelefons zu vergrößern, ist seine Bedieneinheit (B) ausschaltbar. Das Funktelefon wird für abgehende Rufe gesperrt, für eingehende dagegen empfangsbereit gehalten, um bei Anrufen eingehende Daten in einem Speicher (S1) zu speichern. Der Bediener kann diese gespeicherten Daten jederzeit abrufen. Der Bediener kann nicht erwünschte Anrufer für den Empfang sperren. Außerdem kann er z. B. das Autotelefon so programmieren, dass es zu vorgebbaren Zeiten Anfragen an vorgebbare Kommunikationsdienste aussendet, um Daten von diesen zu empfangen, die ebenfalls in einem Speicher (S1) gespeichert werden. Dies hat den Vorteil, dass die Datenabfragen zu Zeiten günstiger Gebühren erfolgen können.

## Beschreibung

Die Erfindung betrifft ein Verfahren zum Betrieb eines Autotelefons sowie ein Autotelefon.

Dem Benutzer eines Autotelefons steht eine Vielzahl an Kommunikationsdiensten und Telefonsystemen zur Verfügung. Als Beispiele seien Global Standard for Mobile Communications, abgekürzt GSM, Short Message Services, abgekürzt SMS, General Packetized Radio Services, abgekürzt GPRS, Circuit Switched Data, abgekürzt CSD, Universal Mobile Telecommunications Systems, abgekürzt UMTS und Digital European Cordless Telecommunication, abgekürzt DECT. Diese Kommunikationsdienste neuer Technologie ermöglichen nicht nur das klassische Telefonieren mit einem anderen Teilnehmer, sondern auch die Übertragung von Daten, z. B. Audio- oder Videodaten.

Es ist daher Aufgabe der Erfindung, die Einsatzmöglichkeiten eines Autotelefons zu vergrößern.

Eine erste im Anspruch 1 angegebene verfahrensmäßige Lösung dieser Aufgabe sieht vor, dass die Bedieneinheit ausgeschaltet wird, dass das Autotelefon für abgehende Rufe gesperrt, für eingehende Anrufe dagegen empfangsbereit gehalten wird und dass bei Anrufen eingehende Daten in einem ersten Speicher gespeichert werden.

Eine vorrichtungsmäßige im Anspruch 6 angegebene Lösung dieser Aufgabe sieht vor, dass die Bedieneinheit ausschaltbar ist, dass das Autotelefon für abgehende Rufe sperrbar, für eingehende Anrufe dagegen empfangsbereit ist und dass bei Anrufen eingehende Daten in einem ersten Speicher speicherbar sind.

Eine zweite im Anspruch 2 angegebene verfahrensmäßige Lösung dieser Aufgabe sieht vor, dass zu vom Bediener vorgebbaren Zeiten automatisch Anrufe vom Autotelefon zu einem vom Bediener vorgebbaren Kommunikationsdienst ausgehen, dass vom angerufenen Kommunikationsdienst Daten abgefragt und in einem Speicher des Autotelefons gespeichert werden.

Das erste erfindungsgemäße Verfahren sieht vor, dass die Bedieneinheit des Autotelefons ausgeschaltet oder inaktiviert wird, so dass keine Rufe mehr vom Autotelefon ausgehen können. Das Autotelefon wird für abgehende Rufe gesperrt, dagegen für eingehende Anrufe empfangsbereit gehalten, um Anrufe entgegennehmen zu können und die bei Anrufen eingehenden Daten in einem Speicher zu speichern.

Diese erfindungsgemäßen Maßnahmen haben den Vorteil, dass auch bei Abwesenheit des Bedieners Daten zum Autotelefon gesendet und dort gespeichert werden können, damit sie der Bediener bei Rückkehr zu seinem Fahrzeug abfragen kann. Es kann sich hierbei beispielsweise um Audio- oder Videodaten handeln.

Eine erste Ausgestaltung des erfindungsgemäßen Verfahrens nach Anspruch 1 sieht vor, dass der Bediener einzelne Anrufer sperren kann. Anrufe von vom Bediener gesperrten Anrufern werden vom Autotelefon nicht verarbeitet. Zum Sperren nicht erwünschter Anrufer oder Teilnehmer ist ein Filter vorgesehen. Alternativ hierzu können die gesperrten Anrufer oder Teilnehmer in einem Speicher gespeichert sein.

Eine weitere Ausgestaltung des erfindungsgemäßen Verfahrens nach Anspruch 1 sieht einen Rechner im Autotelefon vor, der die empfangenden Daten prüft und aufarbeitet, bevor sie im Speicher gespeichert werden.

Das erfindungsgemäße Verfahren nach Anspruch 1 sowie ein Autotelefon zur Durchführung des erfindungsgemäßen Verfahrens nach Anspruch 1 werden anhand der Figuren näher beschrieben und erläutert.

In der Zeichnung zeigen:
- Fig. 1: ein erstes Ausführungsbeispiel eines erfindungsgemäßen Autotelefons und
- Fig. 2: ein zweites Ausführungsbeispiel eines erfindungsgemäßen Autotelefons.

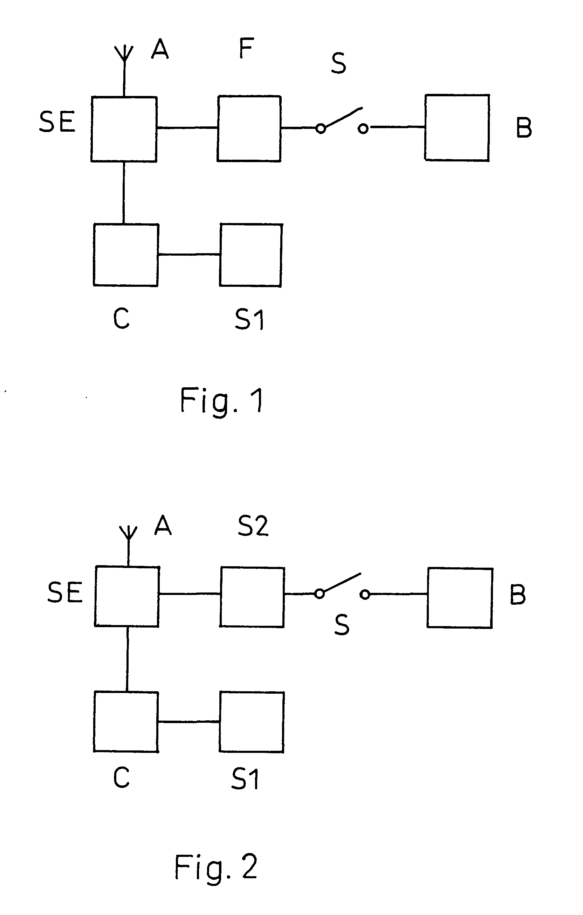

Bei dem in der Fig. 1 gezeigten Ausführungsbeispiel eines erfindungsgemäßen Autotelefons ist eine Antenne A an eine Sende- und Empfangseinheit SE angeschlossen. Eine Bedieneinheit B ist über einen Schalter S und ein Filter F mit der Sende- und Empfangseinheit SE verbunden. Ein Ausgang der Sende- und Empfangseinheit SE ist mit dem Eingang eines Rechners C verbunden, dessen Ausgang mit dem Eingang eines Speichers S1 verbunden ist.

Bei geschlossenem Schalter S können vom Autotelefon sowohl Rufe ausgehen als auch Anrufe entgegengenommen werden. Schaltet der Bediener aber durch Öffnen des Schalters S die Bedieneinheit B aus, so nimmt das Autotelefon nur noch Anrufe entgegen. Die bei einem Anruf empfangenen Daten werden vom Rechner C geprüft, aufgearbeitet und im Speicher S1 gespeichert. Durch Einstellen des Filters F kann der Bediener nicht erwünschte Anrufer sperren. Bei Rückkehr zu seinem Fahrzeug kann der Bediener den Speicher S1 abfragen und die empfangenen Daten hören oder sehen, wenn es sich z. B. um Audio- oder Videodaten handelt.

Bei dem in der Fig. 2 abgebildeten Ausführungsbeispiel der Erfindung ist das Filter durch einen Speicher S2 ersetzt, in den der Bediener unerwünschte Anrufer eingeben kann. Das Autotelefon ist für diese Anrufer dann gesperrt. Es nimmt daher Anrufe gesperrter im Speicher S2 gespeicherter Anrufer nicht entgegen.

Die zweite im Anspruch 2 angegebene erfindungsgemäße Lösung der eingangs gestellten Aufgabe sieht vor, dass zu vorgebbaren Zeiten automatisch Anrufe vom Autotelefon zu einem vorgebbaren Kommunikationsdienst ausgehen, um vom angerufenen Kommunikationsdienst Daten abzufragen und in einem Speicher des Autotelefons zu speichern.

Dieses Verfahren hat den Vorteil, dass der Bediener unabhängig von seinem Aufenthaltsort gewünschte Daten von einem Kommuikationsdienst abfragen und speichern kann. Hierzu ist nicht seine Anwesenheit beim Autotelefon erforderlich. Ein wesentlicher Vorteil ist darin zu sehen, dass der Bediener die Datenabfragen beispeilsweise zu Zeiten mit niedrigen Gebühren automatisch vom Autotelefon durchführen lassen kann.

Besonders vorteilhaft ist es, die in den Ansprüchen 1 und 2 beschriebenen Verfahren miteinander zu kombinieren. Die automatisch abgefraten Daten können ebenfalls vom Rechner vor dem Speichern im Speicher geprüft und aufgearbeitet werden.

Das Autotelefon kann z. B. für den Betrieb mit einer sog. SIM-Karte geeignet sein. Das erfindungsgemäße Autotelefon ist nicht auf einen Kommunikationsdienst beschränkt. Es kann beispielsweise für die GSM, SMS, GPRS, CSD, UMTS oder DECT geeignet sein.

### Bezugszeichenliste

- A: Antenne
- B: Bedieneinheit
- c: Rechner
- F: Filter
- s: Schalter
- SE: Sende- und Empfangseinheit
- S1: Speicher
- S2: Speicher

## Patentansprüche

1. Verfahren zum Betrieb eines Autotelefons mit einer Bedieneinheit (B),
**dadurch gekennzeichnet,**
dass die Bedieneinheit (B) ausgeschaltet wird, dass das Autotelefon für abgehende Rufe gesperrt, für eingehende Anrufe dagegegen empfangsbereit gehalten wird und dass bei Anrufen eingehende Daten in einem ersten Speicher (S1) gespeichert werden.

2. Verfahren zum Betrieb eines Autotelefons mit einer Bedieneinheit (B),
**dadurch gekennzeichnet,**
dass zu vorgebbaren Zeiten automatisch Anrufe vom Autotelefon zu einem vorgebbaren Kommunikationsdienst ausgehen und dass vom angerufenen Kommunikationsdienst Daten abgefragt und in einem ersten Speicher (S1) des Autotelefons gespeichert werden.

3. Verfahren nach Anspruch 1,
**dadurch gekennzeichnet,**
dass vorgebbare Anrufer für den Empfang gesperrt werden.

4. Verfahren nach Anspruch 1, 2 oder 3,
**dadurch gekennzeichnet,**
dass ein Rechner (C) die empfangenen Daten vor der Speicherung prüft und aufarbeitet.

5. Verfahren nach Anspruch 1 kombiniert mit dem Verfahren nach Anspruch 2.

6. Autotelefon mit einer Bedieneinheit (B),
**dadurch gekennzeichnet,**
dass die Bedieneinheit (B) ausschaltbar ist, dass das Funktelefon für abgehene Rufe sperrbar, für eingehende Anrufe dagegen empfangsbereit ist und dass bei Anrufen eingehende Daten in einem ersten Speicher (S1) speicherbar sind.

7. Autotelefon nach Anspruch 6,
**dadurch gekennzeichnet,**
dass vorgebbare Anrufer für den Empfang sperrbar sind.

8. Autotelefon nach Anspruch 7,
**dadurch gekennzeichnet,**
dass zum Sperren der Anrufer ein Filter (F) vorgesehen ist.

9. Autotelefon nach Anspruch 7,
**dadurch gekennzeichnet,**
dass die zum Sperren vorgesehenen Anrufer in einem zweiten Speicher (S2) speicherbar sind.

10. Autotelefon nach einem der Ansprüche 6 bis 9,
**dadurch gekennzeichnet,**
dass ein Rechner (C) zur Prüfung und Aufbereitung der zu speichernden Daten vorgesehen ist.

11. Autotelefon nach einem der Ansprüche 6 bis 10,
**dadurch gekennzeichnet,**
dass das Autotelefon zum Betrieb mit einer SIM-Karte geeignet ist.

12. Verfahren oder Autotelefon nach einem der Ansprüche 1 bis 11,
**dadurch gekennzeichnet,**
dass Audio- und/oder Videodaten vom Autotelefon empfangen und im ersten Speicher (S1) gespeichert werden.

13. Verfahren oder Funktelefon nach einem der Ansprüche 1 bis 12,
**dadurch gekennzeichnet,**
dass das Autotelefon für einen oder mehrere der folgenden Kommunikationsdienste geeignet ist:
CSD
GSM
GPRS
DECT
SMS.
